# EUROPÄISCHE PATENTSCHRIFT

(11) **EP 2 602 224 B1**
(45) Veröffentlichungstag und Bekanntmachung des Hinweises auf die Patenterteilung: **03.02.2016**
(21) Anmeldenummer: 12191742.1
(22) Anmeldetag: 08.11.2012
(51) Int. Cl.: B66F 9/075, B60N 3/10, B60N 3/14, B60R 7/04

(54) **Flurförderzeug, insbesondere Kommissionierflurförderzeug**
Forklift truck, in particular order picker
Chariot de manutention, en particulier chariot de commissionnement

(30) Priorität: 07.12.2011 DE 102011056131
(43) Veröffentlichungstag der Anmeldung: 12.06.2013
(73) Patentinhaber: KION Warehouse Systems GmbH, 72760 Reutlingen (DE)
(72) Erfinder: Vohrer, Matthias, 72762 Reutlingen (DE)
(74) Vertreter: Geirhos, Johann

(56) Entgegenhaltungen:
- DE-A1- 10 360 270
- US-A1- 2007 262 221
- "Cigarette lighter receptacle", Wikipedia, the free encyclopedia, 4 November 2011 (2011-11-04), XP055096930, Retrieved from the Internet: URL:http://en.wikipedia.org/w/index.php?ti tle=Cigarette_lighter_receptacle&oldid=458 906395 [retrieved on 2014-01-16]

## Beschreibung

Die Erfindung betrifft ein Flurförderzeug mit einem Fahrerarbeitsplatz, insbesondere Kommissionierflurförderzeug mit einem anhebbaren und absenkbaren Fahrerstand als Fahrerarbeitsplatz, und einem elektrischen Fahrzeugbordnetz, wobei an dem Fahrerstand ein Lastaufnahmemittel angeordnet ist und eine Bedieneinrichtung an einer dem Lastaufnahmemittel zugewandten Brüstungswand des Fahrerstands in Fahrzeuglängsrichtung im Wesentlichen mittig angeordnet ist.

Ein gattungsgemäßes Flurförderzeug ist aus der US 2007/026221 A1 bekannt.

Die DE 103 60 270 A1 offenbart ein Fahrzeug mit einer zwischen einem rechten und einem linken Sitz angeordneten Mittelkonsole, wobei in der Mittelkonsole ein Getränkehalterdekor eingesetzt ist. Der Getränkehalterdekor ist mit einem Getränkehalterteil, einem Aufnahmefach und einem Zigarettenanzünder versehen.

Kommissionierflurförderzeuge, beispielsweise Kommissionierstapler oder Hochregalkommissionierer bzw. Vertikalkommissionierer, weisen einen beispielsweise als Fahrkorb oder Fahrerkabine für die Bedienperson ausgebildeten, anhebbaren und absenkbaren Fahrerstand auf. An dem Fahrerstand ist hierbei ein Lastaufnahmemittel angeordnet, das beispielsweise von einer in Fahrzeuglängsrichtung angeordneten Lastgabel oder einer Schwenkschubgabel bzw. einer in Fahrzeugquerrichtung angeordneten Teleskopgabel ausgeführt sein kann. Derartige Kommissionierflurförderzeuge werden in Regalanlagen für einen Kommissionierbetrieb und Kommissionierarbeiten von Waren aus höheren Regalebenen eingesetzt. Der Fahrerstand kann mit einer Standplattform für eine stehende Bedienperson versehen sein oder mit einem Fahrersitz, beispielsweise einem Klappsitz, um eine Bedienung durch eine sitzende Bedienperson oder einer wahlweise Bedienung im Sitzen oder Stehen zu ermöglichen.

Bedienpersonen von Kommissionierflurförderzeuge arbeiten oftmals über eine komplette Arbeitsschicht in dem Fahrerarbeitsplatz des Flurförderzeugs. Um die Erreichbarkeit der Bedienperson in dem Fahrerarbeitsplatz des Flurförderzeugs, beispielsweise für Kommissionieraufträge und Arbeitsaufträge, während der Arbeitszeit zu ermöglichen, werden zunehmend Mobilfunkgeräte, beispielsweise Mobiltelefone, Smartphones oder PDA's (Personal Digital Assistent), eingesetzt. Mit den Mobilfunkgeräten kann eine schnelle und direkte Kommunikation mit einer Lagerverwaltung oder einem Transportleitsystem erfolgen, um Kommissionieraufträge bzw. Arbeitsaufträge oder nähere Information für einen Auftrag, beispielsweise den Standort einer Ware oder Ladung, der Bedienperson am Flurförderzeug mitzuteilen. Nach Erledigen des Auftrags kann die Bedienperson über das Mobilfunkgerät eine Bestätigung an die Lagerverwaltung oder ein Transportleitsystem absenden.

Derartige Mobilfunkgeräte weisen eine eigene Stromversorgung unter Verwendung eines Akkumulators auf. Um die Bedienperson jederzeit während einer Arbeitsschicht über das Mobilfunkgerät zu erreichen, ist sicherzustellen, dass der Akkumulator des Mobilfunkgerätes entsprechend geladen ist, um über die Dauer der Arbeitsschicht eine Erreichbarkeit der Bedienperson im Flurförderzeug sicherzustellen. Bei bekannten Flurförderzeugen muss die Bedienperson bei ungenügend geladenem Akkumulator des Mobilfunkgerätes den Fahrerarbeitsplatz und das Flurförderzeug verlassen und das Mobilfunkgerät an einer stationären Ladestation aufladen. Während des Ladevorgangs des Mobilfunkgerätes besteht somit keine Erreichbarkeit der Bedienperson im Flurförderzeug über das Mobilfunkgerät während der Arbeitszeit. Durch die fehlende Erreichbarkeit und Kommunikation mit der Bedienperson wird die Umschlagleistung des Flurförderzeugs reduziert.

Der vorliegenden Erfindung liegt die Aufgabe zugrunde, eine Erreichbarkeit der Bedienperson an dem Fahrerarbeitsplatz des Flurförderzeugs über ein Mobilfunkgerät während der vollständigen Arbeitszeit auf einfache Weise sicherzustellen.

Diese Aufgabe wird erfindungsgemäß dadurch gelöst, dass in dem Fahrerarbeitsplatz ein Ablagemodul befestigt ist, das mit einem Ablagefach für ein Mobilfunkgerät und einer mit dem elektrischen Fahrzeugbordnetz in Verbindung stehenden elektrischen Ladesteckdose als Ladeanschluss für das Mobilfunkgerät versehen ist, wobei das Ablagemodul an der Brüstungswand wahlweise links oder rechts von der Bedieneinrichtung mittels einer Befestigungsschnittstelle lösbar anbaubar ist. Mit dem erfindungsgemäßen Ablagemodul wird bei geringem Bauaufwand erzielt, dass ein Mobilfunkgerät in das Ablagefach des Ablagemoduls abgelegt werden kann und mittels eines geeigneten Ladekabels an die Ladesteckdose angesteckt werden kann, so dass ein Anschluss des Mobilfunkgeräts an das elektrische Fahrzeugbordnetz ermöglicht wird und der Akkumulator des Mobilfunkgeräts in dem Flurförderzeug über die Stromversorgung des Fahrzeugbordnetzes geladen werden kann. Mit dem Ablagemodul wird somit auf einfache Weise eine Ladestation gebildet und eine Lademöglichkeit des Mobilfunkgeräts im Flurförderzeug erzielt, wodurch die Erreichbarkeit der Bedienperson am Flurförderzeugs über das Mobilfunkgerät unabhängig von dem Ladezustand des Akkumulators des Mobilfunkgerätes gegeben und während der gesamten Arbeitszeit sichergestellt ist. Mit dem Ablagemodul wird somit auf einfache Weise durch die ständige Erreichbarkeit der Bedienperson am Flurförderzeug während der gesamten Arbeitszeit über das Mobilfunkgerät die Umschlagleistung des Flurförderzeugs erhöht. Mit einem wahlweisen Anbau des Ablagemoduls links oder rechts von der Bedieneinrichtung, beispielsweise einem Bedienpult, mittels einer Befestigungsschnittstelle, kann auf einfache Weise eine variable und lösbare Anordnung des Ablagemoduls und eine Anpassung der Lage des Ablagemoduls an die Einsatzbedingungen des Flurförderzeugs und den Wunsch der Bedienperson erfolgen.

Gemäß einer bevorzugten Ausgestaltungsform der Erfindung ist das Ablagefach als Ablagemulde ausgebildet. In einer Ablagemulde kann das Mobüfunkgerät auf einfache Weise abgelegt werden, insbesondere während des Ladevorgangs. Eine Ablagemulde ermöglicht es weiterhin, anstelle oder zusätzlich zu dem Mobilfunkgerät weitere Gegenstände im Flurförderzeug mitzuführen, die für einen Kommissionierbetrieb und Kommissionierarbeiten hilfreich sind, insbesondere ein Messer, beispielsweise ein Paketmesser, ein Bandmaß oder einen Meterstab, einen Klebestreifenabroller oder Eddingstifte.

Mit besonderem Vorteil ist die Ladesteckdose unmittelbar angrenzend an das Ablagefach an dem Ablagemodul angeordnet. Hierdurch kann eine kurze Verbindung von dem in dem Ablagefach abgelegten Mobilfunkgerät zu der elektrischen Ladesteckdose erzielt werden, so dass im Ladebetrieb des Mobilfunkgeräts eine kurze und aufgeräumte Führung eines Ladekabels ermöglicht wird, so dass die Bedienperson im Fahrerstand von dem in die Ladesteckdose eingesteckten Ladekabel während des Ladebetriebs des Mobilfunkgerätes nicht behindert oder beeinträchtigt wird.

Gemäß einer bevorzugten Ausgestaltungsform der Erfindung ist die Ladesteckdose durch eine Abtrennwand von dem Ablagefach abgetrennt an dem Ablagemodul angeordnet. Hierdurch wird auf einfache Weise ein geschützter Einbau der Ladesteckdose von dem Ablagefach erzielt, so dass eine Beschädigung der Ladesteckdose durch die in dem Ablagefach befindlichen Gegenstände wirksam vermieden werden kann.

Besondere Vorteile ergeben sich, wenn die Ladesteckdose versenkt in einer Wand des Ablagemoduls eingebaut ist. Durch einen versenkten Einbau der Ladesteckdose in einer Wand des Ablagemoduls wird ein integraler und integrierter Einbau der Ladesteckdose in dem Ablagemodul erzielt, so dass die Ladesteckdose auf einfache Weise vor mechanischen Beschädigungen geschützt werden kann.

Gemäß einer vorteilhaften Weiterbildung der Erfindung ist die Ladesteckdose mit einer Schutzkappe, insbesondere einem Verschlußdeckel, versehen. Mit einer die Ladesteckdose abdeckenden Schutzkappe kann auf einfache Weise verhindert werden, dass bei nicht eingestecktem Ladekabel des Mobilfunkgerätes außerhalb des Ladebetriebs des Mobilfunkgerätes Gegenstände in die Ladesteckdose gelangen können, die zu einem Kurzschiuss in der Ladesteckdose führen könnten.

Mit besonderem Vorteil ist gemäß einer bevorzugten Weiterbildung der Erfindung das Ablagemodul mit einem Getränkehalter, insbesondere einem Flaschenhalter, und/oder einem Stifteköcher versehen. Mit einem zusätzlichen Getränkehalter und/oder einem zusätzlichen Stifteköcher kann ein multifunktionales Ablagemodul geschaffen werden, das den Betrieb des Flurförderzeugs erleichtert und die Ergonomie sowie den Komfort für die im Fahrerstand befindliche Bedienperson während der Arbeitszeit erhöht. Mit einem derartigen multifunktionalen Ablagemodul wird auf einfache Weise die Erreichbarkeit der Bedienperson im Fahrerarbeitsplatz des Flurförderzeugs während der gesamten Arbeitszeit durch eine Lademöglichkeit des Mobilfunkgerätes sichergestellt, wobei mit dem Ablagefach weiterhin eine Ablagemöglichkeit für weitere Gegenstände geschaffen wird sowie mit einem zusätzlichen Getränkehalter, insbesondere einem Flaschenhalter, und/oder einem Stifteköcher die Ergonomie und der Komfort für die Bedienperson erhöht wird.

Gemäß einer bevorzugten Ausgestaltungsform der Erfindung ist die elektrische Ladesteckdose als Buchse eines Zigarettenanzünders ausgebildet. Mit einer derartigen Ladesteckdose können übliche Ladekabel für das Mobilfunkgerät verwendet werden, so dass das Mobilfunkgerät mit geringem Aufwand im Flurförderzeug geladen werden kann.

Die Befestigungsschnittstelle des Ablagemoduls umfasst mit besonderem Vorteil mindestens eine in dem Fahrerstand angeordnete Befestigungsstange, an der das Ablagemodul verschiebbar und/oder neigbar befestigt ist. An einer Befestigungsstange kann mit geringem Bauaufwand das Ablagemodul lösbar befestigt werden. Mit einer Befestigungsstange wird zudem ermöglicht, das Ablagemodul beidseitig oder einseitig links bzw. rechts des Bedienpultes an der Brüstungswand anzuordnen, wobei weiterhin eine Seitenverschiebbarkeit und Neigbarkeit des Ablagemoduls geschaffen werden kann.

Mit besonderem Vorteil ist das Ablagemodul an der Befestigungstange mittels einer Klemmeinrichtung, insbesondere mindestens einer Klammer, befestigt. Mit einer Klemmeinrichtung kann auf einfache Weise das Ablagemodul an einer Befestigungsstange lösbar und bevorzugt seitlich verschiebbar und/oder neigbar angeordnet werden.

Weitere Vorteile und Einzelheiten der Erfindung werden anhand der in den schematischen Figuren dargestellten Ausführungsbeispiele näher erläutert. Hierbei zeigt
- Figur 1: ein erfindungsgemäßes Flurförderzeug in einer Seitenansicht,
- Figur 2: den von einem anhebbaren und absenkbaren Fahrerstand gebildeten Fahrerarbeitsplatz des Flurförderzeugs der Figur 1 mit einem erfindungsgemäßen Ablagemodul,
- Figur 3: einen Ausschnitt der Figur 2 in einer vergrößerten Darstellung und
- Figur 4: das erfindungsgemäße Ablagemodul in einem Längsschnitt.

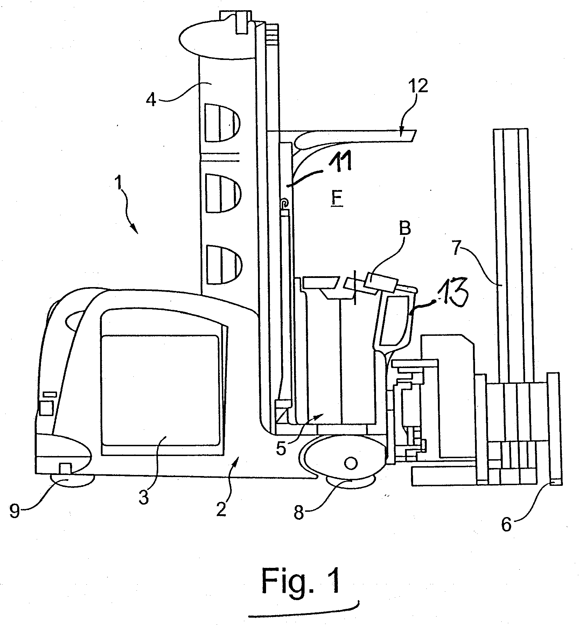

In der Figur 1 ist ein erfindungsgemäßer, beispielsweise als Hochregalflurförderzeug ausgebildeter Kommissionierstapler 1 in einer Seitenansicht als Beispiels eines als Kommissionierflurförderzeugs 1 ausgebildeten Flurförderzeugs dargestellt.

Das Kommissionierflurförderzeug 1 weist einen Rahmen 2 auf, in dem ein Batteriefach zur Aufnahme einer beispielsweise als Antriebsbatterie ausgebildeten Energieversorgungseinheit 3 eines batterie-elektrischen Antriebssystems des Flurförderzeugs ausgebildet ist. Das Kommissionierflurförderzeug 1 weist ein von einem Hubgerüst gebildetes Hubwerk 4 auf, an dem ein als Fahrkorb bzw. Fahrerkabine ausgebildeter Fahrerstand 5, der einen Fahrerarbeitsplatz F für eine Bedienperson bildet, mittels eines nicht näher dargestellten Hubantriebs auf- und abbewegbar angeordnet ist. An dem Fahrerstand 5 ist bei dem dargestellten Kommissionierflurförderzeug 1 ein Lastaufnahmemittel 6 befestigt, das beispielsweise als Schwenkschubgabel ausgebildet ist, die an einen am Fahrerstand 5 angeordneten Hubmast 7 anhebbar und absenkbar angeordnet ist. Alternativ kann das Lastaufnahmemittel von einer in Fahrzeugquerrichtung verschiebbar angeordneten Teleskopgabel gebildet werden, die an dem Fahrerstand 5 angeordnet ist.

In dem anhebbaren und absenkbaren Fahrerstand 5 sind die für die Bedienung des Kommissionierflurförderzeugs 1 erforderlichen Steuer- und Bedienelemente angeordnet, beispielsweise in Form einer als Bedienpult ausgebildeten Bedieneinrichtung B. Das Bedienpult ist zur Steuerung des Fahrantriebs und der Lasthandhabungsfunktionen des Kommissionierflurförderzeugs 1 mit entsprechenden Bedienelementen sowie einem Lenkbetätigungselement zur Steuerung einer Lenkung versehen. Weiterhin ist das Bedienpult mit einem Display versehen.

Das Kommissionierflurförderzeug 1 stützt sich mittels Laufrädern 8, die an einem lastteilseitigen Ende des Rahmens 2 angeordnet ist, und einem lenkbaren Antriebsrad 9, das an einem antriebsteilseitigen Ende des Rahmens 2 angeordnet ist, auf einer Fahrbahn ab. Im antriebsteilseitigen Ende des Rahmens 2 ist weiterhin ein nicht näher dargestelltes elektrisches Antriebssystem angeordnet, das einen elektrischen Fahrmotor und einen Lenkantrieb, beispielsweise einen elektrischen Lenkmotor, für das lenkbare Antriebsrad 9 sowie ein elektrisch betriebenes Hydraulikpumpenaggregat umfasst, das zur Versorgung der Arbeitshydraulik vorgesehen ist, die von dem Hubantrieb des Hubwerkes 4 sowie einem Hubantrieb des Hubmastes 7 sowie Antrieben für die im dargestellten Ausführungsbeispiel vorgesehene Schwenkschubgabel als Lastaufnahmemittel 6 gebildet sind.

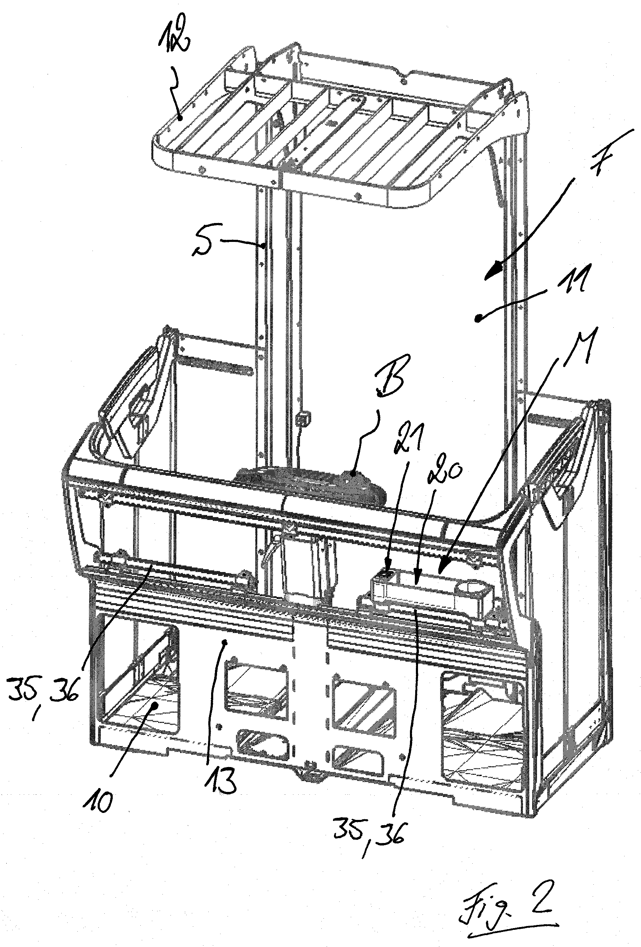

Der den Fahrerarbeitsplatz F definierende Fahrerstand 5 ist - wie aus der Figur 2 weiter ersichtlich ist - von einer Fahrerstandplattform 10, einer dem Hubwerk 4 zugewandten Rückwand 11, an der ein Fahrerschutzdach 12 angeordnet ist, und einer dem Lastaufnahmemittel 6 zugewandten vertikalen Brüstungswand 13 gebildet. An der Rückwand 11 des Fahrerstandes 5 kann ein nicht näher dargestellter Fahrersitz mit einer klappbaren Sitzfläche angeordnet werden, so dass das Kommissionierflurförderzeug 1 von einer im Fahrerstand 5 befindlichen Bedienperson wahlweise in stehender Haltung oder in sitzender Haltung bedient werden kann.

Die von dem Bedienpult gebildete Bedieneinrichtung B ist an der dem Lastaufnahmemittel 6 zugewandten Brüstungswand 13 des anhebbaren Fahrerstandes 5 mittig zur Fahrzeuglängsachse angeordnet.

Das Kommissionierflurförderzeug 1 weist ein elektrisches Fahrzeugbordnetz auf, das beispielsweise als 12V-Bordnetz ausgebildet ist und von der Antriebsbatterie mit elektrischer Energie versorgt wird.

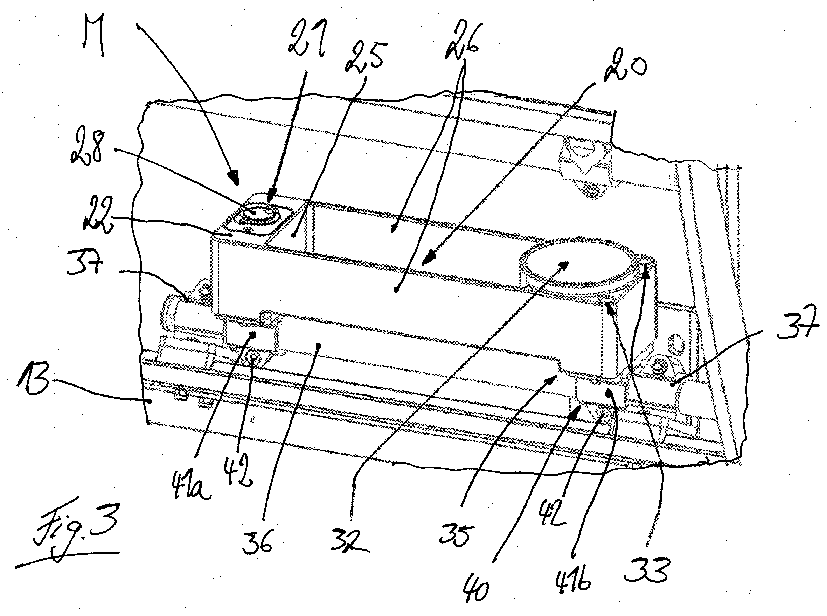

Erfindungsgemäß ist in dem Fahrerstand 5 ein multifunktionales Ablagemodul M angebaut, das - wie in der Figur 3 näher dargestellt ist - mit einem Ablagefach 20 für ein Mobilfunkgerät und einer elektrischen Ladesteckdose 21 versehen ist, die an das elektrische Fahrzeugbordnetz des Kommissionierflurförderzeug 1 angeschlossen ist.

Das Ablagefach 20 ist im dargestellten Ausführungbeispiel als nach oben offene Ablagemulde ausgebildet. Das Ablagefach 20 erstreckt sich in Längsrichtung des Ablagemoduls M.

Im Bereich einer ersten Stirnseite des Ablagemoduls M ist die Ladesteckdose 21 unmittelbar angrenzend an das Ablagefach 20 angeordnet.

Die Ladesteckdose 21 ist im dargestellten Ausführungsbeispiel als Buchse eines Zigarettenanzünders ausgebildet. Die Ladesteckdose 21 ist versenkt und somit integriert in einer Wand des Ablagemoduls M eingebaut.

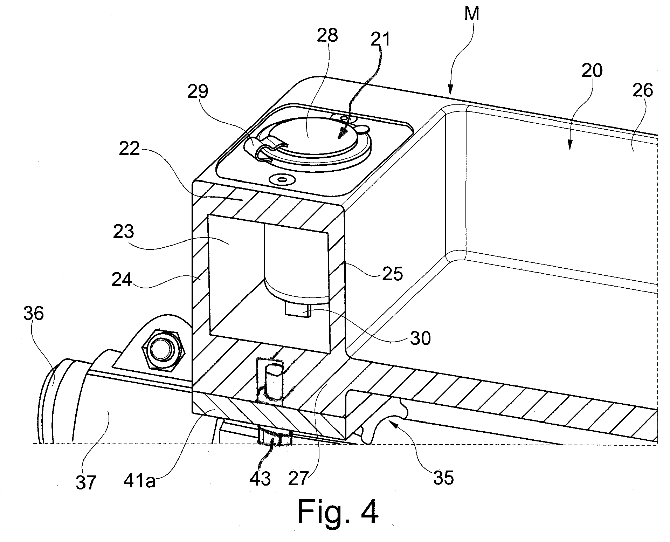

Wie aus der Figur 4 ersichtlich ist, in der das Ablagemodul M im Bereich der ersten Stirnseite in einem Längsschnitt dargestellt ist, ist zum versenkten Einbau der Ladesteckdose 21 eine Einbaukammer 23 an der ersten Stirnseite des Ablagemoduls M ausgebildet, die von einer Stirnwand 24, einer Abtrennwand 25, einer vorderen und hinteren Seitenwand 26, sowie einem Boden 27 und der deckelartigen oberen Wand 22 gebildet ist. Die Abtrennwand 25 trennt hierbei die Einbaukammer 23 mit der eingebauten Ladesteckdose 21 von dem Ablagefach 20 ab. Die Seitenwände 26 und der Boden 27 begrenzen ebenfalls gleichzeitig das Ablagefach 20.

Im dargestellten Ausführungsbeispiel ist die Ladesteckdose 21 in der oberen Wand 22 in vertikaler Richtung eingebaut. Die Ladesteckdose 21 ist weiterhin mit einer Schutzkappe 28 versehen, mit der die Ladesteckdose 21 deckelartig verschließbar ist. im dargestellten Ausführungsbeispiel ist die Schutzkappe 28 als Verschlußdeckel ausgebildet, der mittels eines elastischen Bügels 29 an der Ladesteckdose 21 verliersicher befestigt ist. Die Ladesteckdose 21 ist innerhalb der Einbaukammer 23 mit Steckeranschlüssen 30 versehen, mit denen ein elektrischer Anschluss an das Fahrzeugbordnetz ermöglicht wird.

Im Bereich einer der Ladesteckdose 21 gegenüberliegenden zweiten Stirnseite des Ablagemoduls M ist das erfindungsgemäße multifunktionale Ablagemodul M mit einem als Flaschenhalter ausgebildeten Getränkehalter 32 und mindestens einem Stifteköcher 33 versehen.

Der Getränkehalter 32 und der Stifteköcher 33 sind von entsprechenden nach oben offenen Aufnahmeausnehmungen, beispielsweise entsprechenden bohrungsförmigen Ausnehmungen, des Ablagemoduls M gebildet.

Das erfindungsgemäße Ablagemodul M ist an der Brüstungswand 13 des Fahrerstandes 5 mittels einer lösbaren Befestigungsschnittstelle 35 wahlweise links oder rechts von der mittig angeordneten Bedieneinrichtung B anbaubar.

Die Befestigungsschnittstelle 35 umfasst mindestens eine rohrförmige Befestigungsstange 36, die in Fahrzeugquerrichtung horizontal angeordnet ist und an dem Fahrerstand 5 mittels entsprechender Halter 37 im Bereich der Brüstungswand 13 befestigt sind. Das Ablagemodul M ist mittels einer Klemmeinrichtung 40 an der Befestigungsstange 36 lösbar befestigt und bevorzugt um die Längsachse der Befestigungsstange 36 neigbar und/oder entlang der Befestigungsstange 36 längsverschiebbar und lösbar angeordnet. Die Klemmeinrichtung 40 ist im dargestellten Ausführungsbeispiel von zwei die Befestigungstange 36 umgreifenden Klammern 41 a, 41 b gebildet, die mittels Klemmschrauben 42 und/oder nicht näher dargestellten Klemmhebeln mit der Befestigungsstange 36 verklemmbar ist. Die Klammern 41 a, 41 b sind im dargestellten Ausführungsbeispiel mittels Schraubverbindungen 43 an dem Ablagemodul M befestigt.

Die Halter 37 zur Befestigung der Befestigungsstange 36 an der Brüstungswand 13 sind - wie aus der Figur 3 näher ersichtlich ist - von identisch aufgebauten Klemmeinrichtungen mit entsprechenden Klammern gebildet.

Im dargestellten Ausführungsbeispiel umfasst - wie in der Figur 2 näher dargestellt ist - die Befestigungsschnittstelle 35 zwei Befestigungsstangen 36, die an der Brüstungswand 13 des Fahrerstands 5 an beiden Seiten der Bedieneinrichtung B angeordnet sind, so dass das Ablagemodul M wahlweise links oder rechts von der Bedieneinrichtung B angeordnet werden kann.

Das erfindungsgemäße Ablagemodul M ermöglicht auf einfache Weise eine Lademöglichkeit eines Mobilfunkgerätes in dem anhebbaren und absenkbaren Fahrerstand 5, indem das Mobilfunkgerät in das Ablagefach 20 abgelegt und mittels eines geeigneten Ladekabels an die Ladesteckdose 21 angesteckt und somit zum Laden an das elektrische Fahrzeugbordnetz angeschlossen werden kann. Die in dem anhebbaren und absenkbaren Fahrerstand 5 befindliche Bedienperson kann somit mittels eines Mobilfunkgerätes jederzeit während der Arbeitszeit erreicht werden und muss zum Laden des Mobilfunkgerätes den Fahrerarbeitsplatz F nicht verlassen.

Weiterhin können in dem Ablagefach 20 des Ablagemoduls M weitere Gegenstände im Fahrerarbeitsplatz F mitgeführt werden, beispielsweise ein Paketmesser, ein Bandmaß, ein Klebestreifenabroller oder Eddingstifte, die die Bedienperson während der Arbeit im Fahrerstand 5 benötigt. Der Getränkehalter 32 und die Stifteköcher 33 ermöglichen weiterhin eine Mitnahme einer Getränkeflasche und von Stiften, beispielsweise von Kugelschreibern oder Bleistiften.

Das erfindungsgemäße multifunktionale Ablagemodul M bildet somit eine Ladestation für ein Mobilfunkgerät, ein Ablagefach 20 für ein Mobilfunkgerät und weitere Gegenstände, einen Getränkehalter 32 und einen Stifteköcher 33.

Ein weiterer Vorteil des erfindungsgemäßen Ablagemoduls M besteht darin, dass mittels der lösbaren Befestigungsschnittstelle 35 das erfindungsgemäße Ablagemodul M auf einfache Weise variabel an der Brüstungswand 13 angebaut werden kann, so dass sich ein optimale Sicht der Bedienperson auf das Lastaufnahmemittel 6 ergibt, insbesondere die Gabelspitzen eines als Lastgabel ausgebildeten Lastaufnahmemittels 6.

Die Erfindung ist nicht auf das dargestellte Ausführungsbeispiel beschränkt.

Anstelle des vertikalen Einbaus der Ladesteckdose 21 in die obere Wand 22 des Ablagemoduls kann die Ladesteckdose in horizontaler Richtung in die Stirnwand 24 oder eine Seitenwand 26 des Ablagemoduls M versenkt eingebaut werden.

Anstelle einer Befestigungsschnittstelle 35 mit zwei Befestigungsstangen 36 beiderseits des Bedieneinrichtung B zum variablen beidseitigen Anbau des Ablagemoduls M kann die Befestigungsschnittstelle 35 lediglich eine Befestigungstange 36 zum wahlweisen einseitigen Anbau des Ablagemoduls M rechts bzw. links von der Bedieneinrichtung B aufweisen.

## Patentansprüche

1. Flurförderzeug mit einem Fahrerarbeitsplatz, insbesondere Kommissionierflurförderzeug (1) mit einem anhebbaren und absenkbaren Fahrerstand (5) als Fahrerarbeitsplatz (F), und einem elektrischen Fahrzeugbordnetz, wobei an dem Fahrerstand (5) ein Lastaufnahmemittel (6) angeordnet ist und eine Bedieneinrichtung (B) an einer dem Lastaufnahmemittel (6) zugewandten Brüstungswand (13) des Fahrerstands (5) in Fahrzeuglängsrichtung im Wesentlichen mittig angeordnet ist, **dadurch gekennzeichnet, dass** in dem Fahrerarbeitsplatz (F) ein Ablagemodul (M) befestigt ist, das mit einem Ablagefach (20) für ein Mobilfunkgerät und einer mit dem elektrischen Fahrzeugbordnetz in Verbindung stehenden elektrischen Ladesteckdose (21) als Ladeanschluss für das Mobilfunkgerät versehen ist, wobei das Ablagemodul (M) an der Brüstungswand (13) wahlweise links oder rechts von der Bedieneinrichtung (B) mittels einer Befestigungsschnittstelle (35) lösbar anbaubar ist.

2. Flurförderzeug nach Anspruch 1, **dadurch gekennzeichnet, dass** das Ablagefach (20) als Ablagemulde ausgebildet ist.

3. Flurförderzeug nach Anspruch 1 oder 2, **dadurch gekennzeichnet, dass** die Ladesteckdose (21) unmittelbar angrenzend an das Ablagefach (20) an dem Ablagemodul (M) angeordnet ist.

4. Flurförderzeug nach einem der Ansprüche 1 bis 3, **dadurch gekennzeichnet, dass** die Ladesteckdose (21) durch eine Abtrennwand (25) von dem Ablagefach (20) abgetrennt an dem Ablagemodul (M) angeordnet ist.

5. Flurförderzeug nach einem der Ansprüche 1 bis 4, **dadurch gekennzeichnet, dass** die Ladesteckdose (21) versenkt in einer Wand (22; 24; 26) des Ablagemoduls (M) eingebaut ist.

6. Flurförderzeug nach einem der Ansprüche 1 bis 5, **dadurch gekennzeichnet, dass** die Ladesteckdose (21) mit einer Schutzkappe (28), insbesondere einem Verschlußdeckel, versehen ist.

7. Flurförderzeugs nach einem der Ansprüche 1 bis 6, **dadurch gekennzeichnet, dass** das Ablagemodul (M) mit einem Getränkehalter (32), insbesondere einem Flaschenhalter, und/oder einem Stifteköcher (33) versehen ist.

8. Flurförderzeug nach einem der Ansprüche 1 bis 7, **dadurch gekennzeichnet, dass** die elektrische Ladesteckdose (31) als Buchse eines Zigarettenanzünders ausgebildet ist.

9. Flurförderzeug nach einem der Ansprüche 1 bis 8, **dadurch gekennzeichnet, dass** die Befestigungsschnittstelle (35) des Ablagemoduls (M) mindestens eine in dem Fahrerstand (5) angeordnete Befestigungsstange (36) umfasst, an der das Ablagemodul (M) verschiebbar und/oder neigbar befestigt ist.

10. Flurförderzeug nach Anspruch 9, **dadurch gekennzeichnet, dass** das Ablagemodul (M) an der Befestigungstange (36) mittels einer Klemmeinrichtung (40), insbesondere mindestens einer Klammer (41a, 41b), befestigt ist.

## Claims

1. Industrial truck with a driver's work place, in particular order picker (1) with a raisable and lowerable driver's stand (5) as driver's work place (F), and with a vehicle electrical system, wherein a load pickup means (6) is arranged on the driver's stand (5), and an operating device (B) is arranged substantially centrally in the longitudinal direction of the vehicle on a parapet wall (13), which faces the load pickup means (6), of the driver's stand (5), **characterized in that** a storage module (M) is fastened in the driver's work place (F), the storage module being provided with a storage compartment (20) for a mobile communication device, and with an electric charging socket (21), which is connected to the vehicle electrical system, as charging connection for the mobile communication device, wherein the storage module (M) is attachable releasably to the parapet wall (13) either on the left or right of the operating device (B) by means of a fastening interface (35).

2. Industrial truck according to Claim 1, **characterized in that** the storage compartment (20) is designed as a storage trough.

3. Industrial truck according to Claim 1 or 2, **characterized in that** the charging socket (21) is arranged on the storage module (M) directly adjacent to the storage compartment (20).

4. Industrial truck according to one of Claims 1 to 3, **characterized in that** the charging socket (21) is arranged on the storage module (M) in a manner separated from the storage compartment (20) by a separating wall (25).

5. Industrial truck according to one of Claims 1 to 4, **characterized in that** the charging socket (21) is fitted in a recessed manner in a wall (22; 24; 26) of the storage module (M).

6. Industrial truck according to one of Claims 1 to 5, **characterized in that** the charging socket (21) is provided with a protective cap (28), in particular a closure cover.

7. Industrial truck according to one of Claims 1 to 6, **characterized in that** the storage module (M) is provided with a cup holder (32), in particular a bottle holder, and/or with a pen/pencil holder (33).

8. Industrial truck according to one of Claims 1 to 7, **characterized in that** the electric charging socket (31) is designed as a cigarette lighter socket.

9. Industrial truck according to one of Claims 1 to 8, **characterized in that** the fastening interface (35) of the storage module (M) comprises at least one fastening rod (36) which is arranged in the driver's stand (5) and to which the storage module (M) is fastened in a displaceable and/or inclinable manner.

10. Industrial truck according to Claim 9, **characterized in that** the storage module (M) is fastened to the fastening rod (36) by means of a clamping device (40), in particular by means of at least one clip (41a, 41b).

## Revendications

1. Chariot de manutention avec une place de travail de conducteur, notamment chariot de manutention de préparation de commandes (1) avec un poste de conducteur (5) soulevable et abaissable prenant la forme d'une place de travail de conducteur (F) et un réseau de bord électrique de véhicule, un moyen de réception de charge (6) étant disposé au niveau du poste de conducteur (5) et un dispositif de commande (B) étant disposé pour l'essentiel de façon centrale au niveau d'une paroi de garde-fou (13), orientée vers le moyen de réception de charge (6), du poste de conducteur (5) dans la direction longitudinale du véhicule, **caractérisé en ce qu'**un module de rangement (M) est fixé dans la place de travail de conducteur (F), ledit module étant pourvu d'un vide-poche (20) pour un téléphone portable et d'une prise de charge électrique (21) reliée au réseau de bord électrique de véhicule pour servir de raccord de charge pour le téléphone portable, le module de rangement (M) pouvant être monté de façon amovible à la paroi de garde-fou (13) au choix à gauche ou à droite du dispositif de commande (B) au moyen d'une interface de fixation (35).

2. Chariot de manutention selon la revendication 1, **caractérisé en ce que** le vide-poche (20) prend la forme d'un bac de rangement.

3. Chariot de manutention selon la revendication 1 ou 2, **caractérisé en ce que** la prise de charge électrique (21) est disposée de façon directement connexe au vide-poche (20) au niveau du module de rangement (M).

4. Chariot de manutention selon l'une quelconque des revendications 1 à 3, **caractérisé en ce que** la prise de charge électrique (21) est disposée de façon séparée du vide-poche (20) au niveau du module de rangement (M), par le biais d'une paroi de séparation (25).

5. Chariot de manutention selon l'une quelconque des revendications 1 à 4, **caractérisé en ce que** la prise de charge électrique (21) est placée de façon encastrée dans une paroi (22 ; 24 ; 26) du module de rangement (M).

6. Chariot de manutention selon l'une quelconque des revendications 1 à 5, **caractérisé en ce que** la prise de charge électrique (21) est pourvue d'un bouchon de protection (28), notamment d'un cache de fermeture.

7. Chariot de manutention selon l'une quelconque des revendications 1 à 6, **caractérisé en ce que** le module de rangement (M) est pourvu d'un porte-boisson (32), notamment d'un porte-bouteille et/ou d'un pot à crayons (33).

8. Chariot de manutention selon l'une quelconque des revendications 1 à 7, **caractérisé en ce que** la prise de charge électrique (31) prend la forme d'un fourreau d'un allume-cigare.

9. Chariot de manutention selon l'une quelconque des revendications 1 à 8, **caractérisé en ce que** l'interface de fixation (35) du module de rangement (M) comprend au moins une barre de fixation (36) disposée dans le poste de conducteur (5), le module de rangement (M) étant fixé au niveau de ladite barre de façon à pouvoir être coulissé et/ou incliné.

10. Chariot de manutention selon la revendication 9, **caractérisé en ce que** le module de rangement (M) est fixé au niveau de la barre de fixation (36) au moyen d'un dispositif de serrage (40), notamment au moins d'une agrafe (41a, 41b).
